Europäisches Patentamt

European Patent Office

Office européen des brevets

(19)

(11) Publication number: **0 370 408**
**A1**

(12) **EUROPEAN PATENT APPLICATION**

(21) Application number: **89121321.7**

(22) Date of filing: **17.11.89**

(51) Int. Cl.5: **C08G 18/76, C08G 18/10**

(30) Priority: **21.11.88 US 274525**

(43) Date of publication of application:
**30.05.90 Bulletin 90/22**

(84) Designated Contracting States:
**DE FR GB NL**

(71) Applicant: **AIR PRODUCTS AND CHEMICALS, INC.**
**7201 Hamilton Boulevard**
**Allentown, PA 18195-1501(US)**

(72) Inventor: **Starner, William Edward**
**6801 Leepard Road**
**Miltos, FL 32570(US)**
Inventor: **Casey, Jeremiah Patrick**
**2665 Arbor Circle**
**Emmaus, PA 18049(US)**
Inventor: **Quay, Jeffrey Raymond**
**15 Greene Hill Drive, R.D. No. 1**
**Kutztown, PA 19530(US)**

(74) Representative: **Dipl.-Ing. Schwabe, Dr. Dr.**
**Sandmair, Dr. Marx**
**Stuntzstrasse 16**
**D-8000 München 80(DE)**

(54) **Process for the preparation of polyisocyanate prepolymers and polyurethanes and resulting compositions.**

(57) This invention relates to a polyisocyanate prepolymer for polyurethane and polyurethane/urea elastomer synthesis and to the resulting elastomer. The prepolymer is formed by reacting an alkyl $C_{1-6}$ substituted toluenediisocyanate with a long chain diol under conditions such that essentially a 2:1 adduct is formed. Excess alkyl-substituted toluenediisocyanate is removed prior to forming the elastomer.

EP 0 370 408 A1

# PROCESS FOR THE PREPARATION OF POLYISOCYANATE PREPOLYMERS AND POLYURETHANES AND RESULTING COMPOSITIONS

## TECHNICAL FIELD

This invention relates to polyisocyanate prepolymers for use in preparing polyurethane and polyurethane/urea elastomers and to the resulting elastomers prepared from the prepolymers.

## BACKGROUND OF THE INVENTION

The preparation of polyurethanes and polyurethane/urea elastomers by reacting an aromatic isocyanate with a polyol and then chain extending with a short chain diol or aromatic diamine to form the elastomer is well known. Two processes are used, namely, the prepolymer process and the one shot process which includes reaction injection molding (RIM). A reactant system widely used in the prepolymer process utilizes toluenediisocyanate as the isocyanate component of the prepolymer and polytetramethylene glycol as the polyol component. (Such a system is sold under the trademark Adiprene). Then, the prepolymer is contacted with an aromatic diamine or diol chain extender and the formulation is molded.

The prepolymers using toluenediisocyanate as the isocyanate component have suffered because toluenediisocyanate- is volatile and toxic thus require special handling procedures. Another is that free toluenediisocyanate remains in the prepolymer, and unless extracted, is too reactive for use with all but inactive chain extenders, e.g., methylene bis(orthochloroaniline) (MOCA). U.S. Patents 2,969,386; 3,285,951 and 3,218,348 disclose some of the problems associated with the use of toluenediisocyanate for use in urethane systems.

The prior art has produced a variety of prepolymer systems from toluenediisocyanate (TDI) and long chain polyols and such prior art then include the following patents:

- McGillvary, U.S. Patent 3,701,374, discloses a polyurethane pneumatic tire with excellent strength, elasticity, tear resistance, flat-spotting properties, and overall performance in service, both at ambient and elevated temperature. The elastomer utilized is obtained by chain extending a polyisocyanate prepolymer, prepared by reacting a stoichiometric excess of toluenediisocyanate with 1000 molecular weight (mw) poly-(tetramethylene glycol) at 70-80° C.

- Kaneko, et al, U.S.Patent 3,963,681, discloses urethane elastomers having improved mechanical properties. The prepolymer is prepared by reacting a stoichiometric excess of toluenediisocyanate with a polyether polyol having an average mw range of 1000 to less than 4500 and a molecular weight distribution curve with at least 2 peaks, one at higher and one at lower mw range. The prepolymer then is chain extended with a curing agent.

- Blahak, et al, U.S.Patent 4,133,943, describe an improved process for the production of polyurethane/urea elastomers, in which diamines containing ester groups are used as chain extenders. The polyisocyanate prepolymer utilized in the system was prepared from a polyol and a slight stoichiometric excess of toluenediisocyanate.

Although the elastomers above have desirable properties, the above mentioned prepolymer preparations have shortcomings in terms of many commercial applications, they are:

    1. there is unreacted alkyl substituted toluenediisocyanate in the prepolymer and its presence may cause toxicity and reactivity problems,

    2. stoichiometric excesses of alkyl substituted toluenediisocyanate may lead to non-uniformity in elastomer hard segments, and

    3. high temperature prepolymer processing results in by-product formation, probably allophanate and trimer by-product, which allows hard segment crosslinking and therefore results in lower isocyanate content.

    4. The prepolymers are hard to process due to high initial viscosities, they build viscosity quickly, and require extended cure times. There is some elastomer art which discloses the use of prepolymers free of unreacted toluenediisocyanate. This art is as follows:

Jackle, U.S.Patent 4,182,825, shows polyurethanes with superior dynamic properties produced from polyisocyanate prepolymers, free of unreacted toluenediisocyanate (TDI). The TDI is removed by thin film distillation. A polyisocyanate prepolymer is prepared by reacting a polyether polyol with a stoichiometric amount, e.g., 1.97:1 NCO to OH or slight excess of 80/20 2,4-/2,6-TDI and then removing the unreacted TDI.

Megna, U.S.Patent 4,556,703 discloses the preparation of polyurethanes using toluenediisocyanate feed systems high in 2,6-isomer content for the preparation of the prepolymer. After prepolymer formation, the excess or unreacted toluenediisocyanate is removed. The higher concentrations of 2,6-isomer result in elastomers having lower heat buildup on flexing.

Schmidt, et al , U.S.Patent 4,507,459 & 4,519,432, describe the synthesis of polyurethanes having low hysteresis. A prepolymer of a mononuclear aromatic diisocyanate and polyol are reacted with a chain extender mixture of mononuclear aromatic diamine and polyol. The polyisocyanate prepolymer is prepared by reacting a stoichiometric excess of toluenediisocyanate with polyol.

Some patents although not relevant for polyurethane synthesis show techniques for separating the 2,4-toluenediisocyanate isomer from the 2,6-isomer by reaction with a long chain polyol. For example, U.S. 3,554,872 shows reacting toluenediisocyanate with a long chain diol at a mole ratio of about 3.5 to 1 toluenediisocyanate to diol at 25-30°C. Distillation of the prepolymer to remove unreacted toluenediisocyanate was carried out at temperatures from 130-150°C.

## SUMMARY OF THE INVENTION

This invention relates to a process for producing prepolymers for polyurethane and polyurethane/polyurea elastomers and to the elastomers themselves utilizing an alkyl-substituted toluenediisocyanate based prepolymer free of unreacted alkyl-substituted toluenediisocyanate and essentially free of oligomeric alkyl-substituted toluenediisocyanate by-products. The prepolymer, which is essentially a 2:1 molar adduct, i .e., 2 moles alkyl-substituted toluenediisocyanate reacted per mole of long chain diol is prepared by reacting a $C_{1-6}$ alkyl-substituted toluenediisocyanate with a long chain diol where the mole ratio of said toluenediisocyanate to diol is in the range of at least 4 to 20:1 and preferably in the range of from 4 to 8:1 with reaction temperatures ranging from 20 to about 90°C. After formation of the prepolymer, the unreacted alkyl-substituted toluenediisocyanate is removed from the prepolymer to produce an alkyl-substituted toluenediisocyanate free prepolymer, e.g., less than about 0.15% by. weight. The elastomer is then made by reacting the resultant prepolymer with an aromatic diamine or diol chain extender.

Significant advantages associated with the prepolymer of this invention and the process for producing such prepolymers are:

an ability to use commercial isomer mixtures of toluenediisocyanate to produce the $C_{1-6}$ alkyl-substituted toluenediisocyanates used to make the prepolymer;

a prepolymer system capable of producing elastomers having physical properties including hardness at modest chain extender levels;

a prepolymer suited for producing polyurethane/ureas which have a high stiffness, higher initial modulus, 100% tensile and shear storage modulus;

a relatively straightforward process utilizing conventional processing equipment and techniques.

## DRAWING

Fig. 1 is a plot of prepolymer viscosity for various prepolymers versus temperature.

Fig. 2 is a plot of Dynamic Mechanical Spectra for polyurethane elastomers.

Fig. 3 is a plot of polyurethane elastomer viscosity.

## DETAILED DESCRIPTION OF THE INVENTION

The prepolymers suited for preparing the polyurethane and polyurethane/urea elastomers of this invention are prepared by reacting a $C_{1-6}$ alkyl-substituted toluenediisocyanate with a long chain diol in such a way to minimize by-product formation and thereby produce a prepolymer which is essentially "perfect" in terms of stoichiometric alkyl-substituted toluenediisocyanate to diol ratio. These are perfect in the sense that the prepolymer reaction product contains at least 85% by weight of a prepolymer having 2 moles $C_{1-6}$ alkyl-substituted toluenediisocyanate reacted per mole of long chain diol.

3

Polyether and polyester diols are normally used in the preparation of polyurethane and polyurethane/urea elastomers. The hydroxyl-terminated polyethers are typically polyalkylene ether glycols such as poly(ethylene ether) glycol, poly(propylene ether) glycol and poly(tetramethyleneether) glycol. The polyethers usually, are prepared by the copolymerization of cyclic ether such as ethylene oxide, and propylene oxide with various aliphatic diols such as ethylene glycol, butanediols, e.g. 1,3- and 1,4-butanediols, hexanediol and the like. Polyester diols can also be used for producing the polyurethane and polyurethane/urea elastomers and these would include hydroxyl-terminated polyesters such as polyethylene adipate, polypropylene adipate, polyhexamethylene adipate and copolyesters prepared by copolymerizing ethylene glycol and propylene glycol with the above polyesters which include poly(1,4-butylene-ethylene) adipate and poly(1,4-butylene-propylene) adipate.

The above polyether and polyester diols are conventional for producing polyurethane elastomers and typically they have a molecular weight range of from about 250 to 4,000 and typically from 250 to about 3,000.

The alkyl-substituted toluenediisocyanates typically are formed by the phosgenation of the corresponding alkyl-substituted toluenediamines. Commercially, toluenediamine is manufactured by the dinitration of toluene and the subsequent reduction of the nitro groups to amine groups. As a result of this process, toluenediisocyanate is produced as a mixture of isomers, namely the 2,4- and 2,6-isomers with the percentages being from about 65-80% of the 2,4- and 20-35% of the 2,6-isomer by weight rather than a single product or isomer. The preparation of the $C_{1-6}$ alkyl-substituted toluenediisocyanates is effected typically through alkylation of a toluenediamine isomer mix by reaction with a $C_{2-6}$ olefin. The resultant alkyl group then is ortho to an amine group and provides for reactivity differential. On the other hand, xylene is commonplace and xylenediisocyanate can be produced from xylenediamine.

In the practice of this invention preferred alkyl-substituted toluenediisocyanates are the $C_{2-4}$ alkyl-substituted 2,4- and 2,6-toluenediisocyanate isomers. Examples include 3,5-diethyl-2,4- and 2,6-toluenediisocyanate; 5-isopropyl-2,4-toluenediisocyanate; 3-isopropyl-2, 6-toluenediisocyanate 3,5-diisopropyl-2,4- and 2,6-toluenediisocyanate; 3- and 4-tert-butyl-2,6-toluenediisocyanate and 5-tert-butyl-2,4-toluenediisocyanate.

In the practice of this invention considerable ingenuity is exercised in forming the prepolymer which is subsequently reacted with chain extender to produce elastomers having high performance properties. First, in the prepolymer synthesis it is important to maintain a high mole ratio of alkyl-substituted toluenediisocyanate to the diol, e.g. a range from 4 to 20:1 diol. As the level of alkyl-substituted toluenediisocyanate to polyol approaches 4:1, greater quantities of oligomers in the form of alkyl-substituted toluenediisocyanate by-products, are formed which detract from the performance characteristics of the polyurethane elastomer system. Usually, the mole ratio of alkyl-substituted toluenediisocyanate to diol in the reaction is from 4 to 8:1 moles of alkyl-substituted toluenediisocyanate to diol to produce oligomers at less than 15% by weight and preferably less than 5% by weight.

A second parameter which is important in producing the prepolymer for a polyurethane elastomer is the incorporation of a high quantity of 2,6-alkyl-substituted toluenediisocyanate, i.e. higher than may be achieved by a conventional process. For commercial efficiency, as well as prepolymer efficiency, it is preferred that the prepolymer product have a final 2,6-isomer content of about 20% and about 80% of the 2,4-isomer. In order to produce such prepolymer having a reacted 80/20 mixture of 2,4- to 2,6-alkyl-substituted toluenediisocyanate isomer content, the feed alkyl-substituted toluenediisocyanate used in preparing the prepolymer usually must contain a higher concentration of 2,6-isomer than the 80/20 mole ratios prescribed. This is because the alkyl-substituted-2,4-toluene-diisocyanate isomer usually is more reactive with the hydroxyl group of the long chain diol than the alkyl-substituted 2,6-toluenediisocyanate isomer. Typically, the 2,6-alkyl-substituted toluenediisocyanate isomer content will be greater than 20-30% by weight of the alkyl-substituted toluenediisocyanate mix in order to produce a reaction product containing approximately 65-80% reacted alkyl-substituted 2,4-toluenediisocyanate isomer and 20 to 35% reacted alkyl-substituted 2,6-toluenediisocyanate. A few reactions might be required in order to focus in on the appropriate feed isomer ratio to produce the desired reacted content of the alkyl-substituted 2,4- and 2,6-toluenediisocyanate ratios. For tertiarybutyltoluenediisocyanate, an 80/20 incorporation, is achieved at a 4:1 addition (NCO/OH) with a 77/23 2,4/2,6 isomer ratio.

Polyurethane and polyurethane/urea elastomers are prepared by reacting the prepolymer with a conventional chain extender, suitably an aromatic or aliphatic diamine or $C_{2-6}$ short chain aliphatic diol. Examples of chain extenders include 4,4'-methylene bis(o-chloroaniline), toluenediamine, 1,4-cyclohexanediamine, 4,4'-methylenedianiline, diethyltoluenediamine, 5-tert-butyl-2,4- and 3-tert-butyl-2,6-toluenediamine, 5-tert-amyl-2,4- and 3-tert-amyl-2,6-toluenediamine and chlorotoluenediamine. Representative diols include ethylene glycol, propylene glycol, butanediol and hexanediol.

The prepolymers from which the polyurethanes and polyurethane/urea elastomers are prepared should have a reacted isocyanate content substantially equal to the stoichiometric mole ratio, 2 moles reacted alkyl-substituted toluenediisocyanate per mole of long chain diol. This objective is achieved by maintaining a high isocyanate to diol molar ratio at moderate temperatures. Maintaining a high mole ratio of feed alkyl-substituted toluenediisocyanate to diol is extremely important because when the mole ratio of alkyl-substituted toluenediisocyanate to diol is lowered to slightly above stoichiometric, e.g., 10% or less, which is conventional, oligomers are formed. Higher oligomer formation results in a lower isocyanate levels in the prepolymer (assuming tBTDI-free). A lower level of reactive isocyanate in the prepolymer diminishes performance properties in the polyurethane and polyurethane/urea elastomer because it reduces the quantity of diamine or diol chain extender that can be reacted with the prepolymer to produce elastomer hard segment. Although the actual percentage difference between the substantially stoichiometric isocyanate content in the prepolymer and actual isocyanate content in prior art prepolymer systems appears to be small, that difference, because of isocyanate content, sequencing, etc., is substantial in terms of the overall properties imparted to the urethane elastomer.

Ideally, in the preparation of a prepolymer for a polyurethane or polyurethane/urea system contemplated here, the actual prepolymer reaction product should contain at least 85%, and preferably at least 90% by weight of a prepolymer having 2 moles reacted alkyl-substituted toluenediisocyanate per mole of diol. Levels of reacted alkyl-substituted toluenediisocyanate below about 90%, and particularly below about 85% of stoichiometric, are direct evidence of by-product formation and/or oligomer formation.

Temperature also is an important parameter in minimizing oligomer formation in the prepolymer. Typically, as temperature is increased, one must increase the mole ratio of alkyl-substituted toluenediisocyanate to diol. As one approaches the lower end of the desired mole ratio range of alkyl-substituted toluenediisocyanate to diol, one may experience higher concentrations of oligomer in the prepolymer and subsequently experience decreased properties in the resulting elastomers. On the other hand, as temperature is reduced from a maximum of about 90°C to a level from 40-60°C, mole ratios alkyl-substituted toluenediisocyanate to diol can be lowered and possibly molar ratios as low as 4 moles alkyl-substituted toluenediisocyanate per mole of long chain diol can be utilized. However, it is preferred that the mole ratio of alkyl-substituted toluenediisocyanate to diol is from 4 to 8:1 with the reaction being concluded at temperatures from 40-60°C. A temperature below 40°C may result in some solidification of material during processing.

Although temperature control has been described as an important parameter in the reaction phase it must be recognized temperature control is also important in the recovery phase. During removal of unreacted alkyl-substituted toluenediisocyanate from the prepolymer, the temperature should be maintained as low as possible to avoid reaction of the free unreacted alkyl-substituted toluenediisocyanate with the prepolymer. Substantial oligomer formation in the form of allophanates can occur during this removal phase. For this reason if distillation techniques are used to remove unreacted $C_{1-6}$ alkyl-substituted toluenediisocyanate, a wiped film distillation technique should be considered in order to avoid oligomerization during prepolymer purification.

After prepolymer formation unreacted alkyl-substituted toluenediisocyanate is removed from the prepolymer to produce a free or unreacted alkyl-substituted toluenediisocyanate content <0.15% and preferably less than 0.1%. Higher quantities of unreacted $C_{1-6}$ alkyl-substituted toluenediisocyanate may cause gelation during molding or result in poorer elastomer properties. In addition, toxicity and handling problems may occur.

Elastomer formulation is carried out in conventional manner. For example, a catalyst may be used to enhance cure of the polyurethane formulation and catalysts include mono and dicarboxylic acids and their metal salts as well as tertiary amines. Examples of catalysts commonly used include glutaric acid, propionic acid, and triethylenediamine and N-ethylmorpholine. Optionally, a metal promoter such as dibutyl tin dilaurate may be used. Other additives may be added and such addition is within the skill of the art.

The following examples are provided to illustrate embodiments of the invention and are not intended to restrict the scope thereof.


## Example 1


tBTDI-free Urethane-linked Prepolymer

To prepare a tBTDI-free urethaned-linked prepolymer, weight 842.7 grams (3.7 moles) tertiarybutyltoluenediisocyanate (tBTDI), having an 83.7/16.3 ratio of the 5-tertiarybutyl-2,4-toluenediisocyanate and 3-tertiarybutyl-2,6-toluenediisocyanate isomers, was charged into a 3 liter jacketed reaction kettle equipped with a mechanical stirrer, thermocouple, $N_2$ purge, dropping funnel and condenser. The reactor was heated to 45°C. 621.5 grams (0.9 moles) 650 Mn (OH# 166.5) polytetramethyleneoxide diol (Terethane 650 polyol marketed by duPont) was added to the stirred reactor over 1.5 hours. The reactor contents were stirred at 45°C for an additional 20 hours. A clear yellowish tinted liquid was obtained.

The unreacted tBTDI was subsequently removed to produce a tertiarybutyl toluenediisocyanate-free urethane-linked prepolymer using a thin film still operation under the following conditions:

| Vacuum | 0.5 mm Hg |
|---|---|
| Temperature | 150°C |
| Feed Rate | 60 - 120 g/hour |

The final product was a viscous clear yellow tinted liquid at room temperature and had the following analysis.

| Unreacted tBTDI by LC | <0.01% (detection limit) |
|---|---|
| % NCO in prepolymer | 7.27% |
| Theoretical % NCO in 2:1 prepolymer | 7.41% |
| Calculated minimum 2:1 adduct content* by weight | 95.6% |

* calculated from % NCO and % free isocyanate assuming all oligomer is 3:2

## Example 2

### Polyurethane Prepolymer - Prior Art

In this example, the procedure of Example 1 was essentially repeated except that the molar ratio of tertiarybutyltoluenediisocyanate to diol was reduced from 4:1 as in Example 1 to about 2:1. More specifically, 408.8 grams (1.8 moles) of a tertiarybutyltoluenediisocyanate isomer mix (same as in Example 1) was charged into a 2 liter round bottom flask equipped with a heating mantel, mechanical stirred, $N_2$ inlet, and additional funnel. The contents were heated to 50°C. 599.8 grams (0.9 moles) 650 $M_n$ (OH# 166.5) polytetramethyleneoxide diol (Terethane 650 diol) was added to the reaction flask over 1 hour. The temperature was then increased to 75 C and held for an additional 12 hours. (Temperature differences were required vis-a-vis Example 1 to complete the reaction.

The final produce was a viscous clear yellow tinted liquid and was analyzed as follows:

| Unreacted tBTDI by LC | 2.9% |
|---|---|
| % NCO in prepolymer | 7.11% |
| Calculated minimum 2:1 adduct content | 62.3% |

As can be seen, unreacted tBTDI was present in the prepolymer, and there was substantial oligomeric by-products.

## Example 3

Prepolymer Viscosity Profile

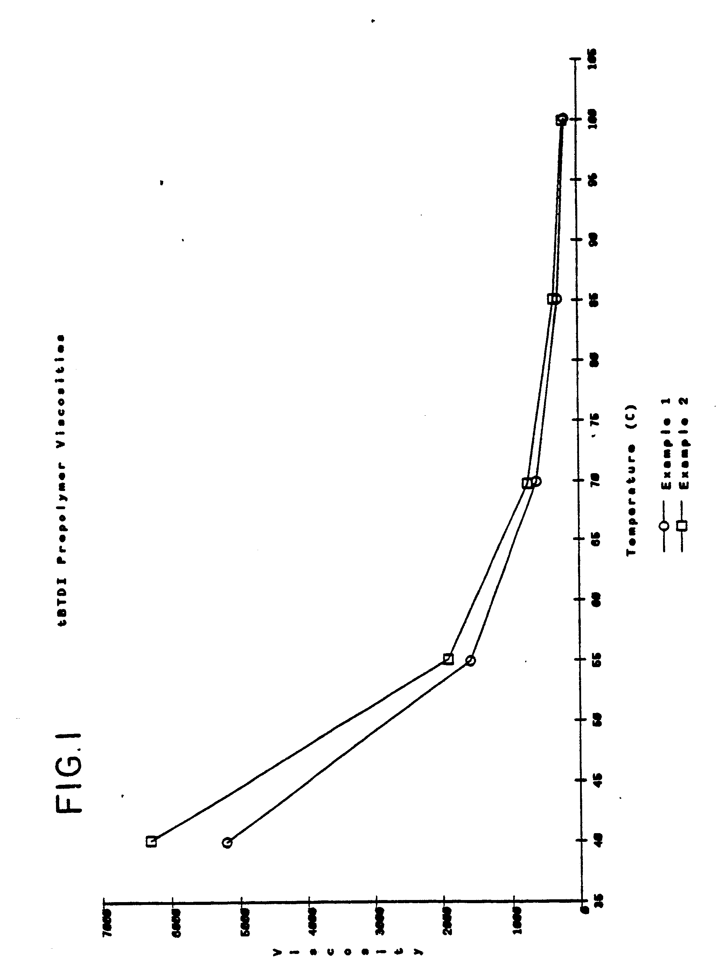

Viscosity measurements of the prepolymers of Example 1 and 2 were obtained using a Brookfield RVT viscometer equipped with a Thermosell unit. A plot of the prepolymer viscosity versus temperature is given in Figure 1. Measurements were carried out at 20 rpm with a #27 spindle (calculated shear rate of 6.8 sec$^{-1}$). As can be seen the prepolymer of Example 1 which was free of tertiarybutyltoluenediisocyanate and of lower oligomer content is of lower viscosity at temperatures from 25-60°C than the Example 2 prepolymer.

Example 4

Polyurethane Elastomer Preparation and Properties

Cast elastomers were prepared by conventional techniques and then tested.

More specifically, 79.49 parts of the prepolymer of Example 1 and 17.59 parts methylene bis-(orthochloroaniline) (MBOCA) were degassed and heated to 85°C. The two components were then mixed together and poured into a 6 x 6 x 1/8" mold which had been preheated to 110°C. The mold was then closed, clamped and placed in an oven at 110°C for 16 hours. This elastomer was identified as Run 1.

Using the above procedure, additional elastomers were prepared from the following components and are set forth below along with Run 1.

| Runs | Polyisocyanate | Chain Extender |
|------|----------------|----------------|
| 1 | 79.49 parts Ex. 1 | 17.59 parts MBOCA |
| 2 | 63.16 parts Ex. 1 | 9.27 parts tBTDA |
| 3 | 81.98 parts Ex. 1 | 14.47 parts Ethacure-300 |
| 4 | 80.22 parts Ex. 2 | 17.40 parts MBOCA |
| 5 | 61.95 parts Ex. 2 | 8.89 parts tBTDA |
| 6 | 81.71 parts Ex. 2 | 14.40 parts Ethacure-300 |

Elastomer physical properties were obtained using the following ASTM test methods. The tests were performed at ambient and 121°C.

| | |
|--------------------------|----------------|
| Tensile Strength (micro) | ASTM D-412-83 |
| Percent Elongation | ASTM D-412-83 |
| Tear Strength (Die C) | ASTM D-624-81 |
| Hardness | ASTM D-2240-79 |

MBOCA refers to methylene bis(orthochloroaniline);
tBTDA refers to an 80/20 mixture of 5-tertiarybutyl-2,4-toluenediisocyanate and 3-tertiarybutyl-2,6-toluenediisocyanate;
Ethacure 300 refers to dithiomethyltoluenediamine marketed by Ethyl Corporation.

| Tertiarybutyltoluenediisocyanate-Free Prepolymer | | | |
|---|---|---|---|
| | Run 1 | Run 2 | Run 3 |
| Polyol | T-650 | T-650 | T-650 |
| Chain Extender | MBOCA | tBTDA | E-300 |
| % Hard Segment | 48.9 | 45.6 | 47.0 |
| Shore A/D | 98 / 68 | 97 / 63 | 97 / 59 |
| Temperature (C) | 25 | 25 | 25 |
| 100 % Tensile (psi) | 3900 | 3140 | 2500 |
| 200 % Tensile (psi) | 4630 | 4190 | 3640 |
| 300 % Tensile (psi) | 5600 | 4920 | 4580 |
| Break Tensile (psi) | 6300 | 5550 | 5360 |
| % Elongation (psi) | 350 | 390 | 390 |
| Die C Tear (pli) | 910 | 870 | 700 |

| Conventional Prior Art Prepolymer | | | |
|---|---|---|---|
| | Run 4 | Run 5 | Run 6 |
| Polyol | T-650 | T-650 | T-650 |
| Chain Extender | MBOCA | tBTDA | E-300 |
| % Hard Segment | 50.7 | 47.5 | 49.0 |
| Shore A/D | 98 / 67 | 96 / 61 | 96 / 58 |
| Temperature (C) | 25 | 25 | 25 |
| 100 % Tensile (psi) | 3740 | 2950 | 2120 |
| 200 % Tensile (psi) | 4680 | 4060 | 3180 |
| 300 % Tensile (psi) | 5850 | 4860 | 4110 |
| Break Tensile (psi) | 6390 | 5500 | 5090 |
| % Elongation (psi) | 330 | 390 | 430 |
| Die C Tear (pli) | 910 | 860 | 660 |

The elastomers prepared with the tertiarybutyltoluenediisocyanate prepolymer (Runs 1-3) are harder and have a higher 100% tensile than the conventional elastomers (Runs 4-6) despite the fact that the conventional elastomers have a higher hard segment content "hard segment content = (wt. tBTDI + wt. chain extender)/ (total wt. elastomer)". The conventional prepolymer has a higher hard segment content despite its lower % NCO due to the large amount of tBTDI incorporated in the prepolymer oligomers. The tertiarybutyltoluenediisocyanate-free prepolymer (Ex. 1) contains 37.6% tBTDI by weight whereas the conventional prepolymer contains 40.0% tBTDI. Therefore, the Example 1 prepolymer more efficiently incorporates the tBTDI for reaction with chain extender.

## Example 5

## Dynamic Mechanical Analysis

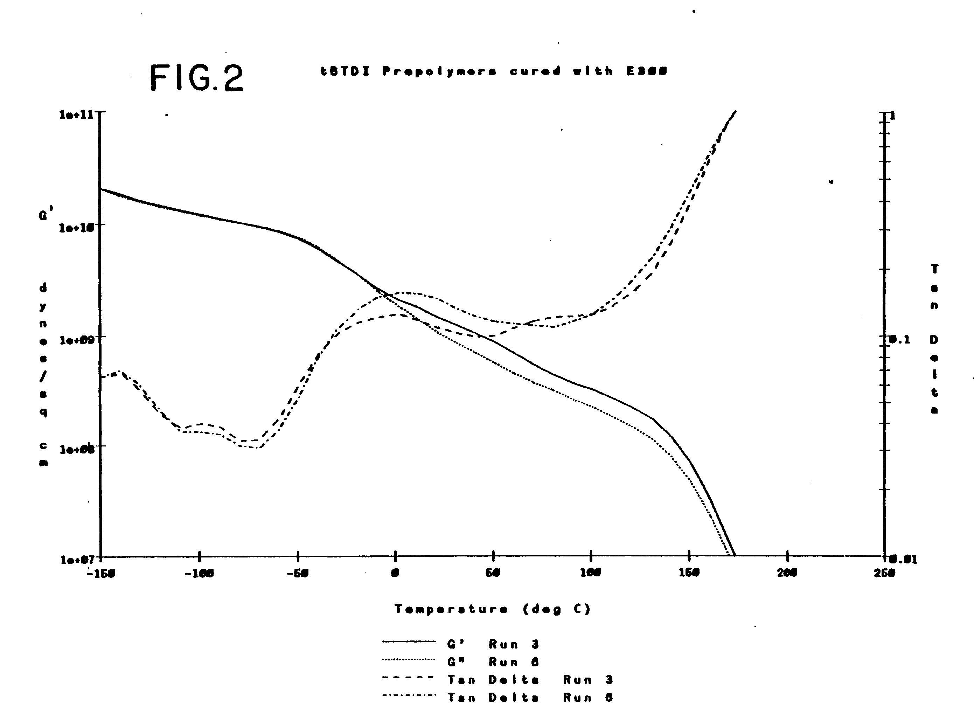

Dynamic mechanical spectra were obtained for Runs 3 and 6 of Example 4 using a Rheometrics RMS-605 Mechanical Spectrometer operating in torsional/rectangular mode at 6.28 rad/sec. Temperature sweeps were employed from -150 to 250° C. Plots of the shear storage modulus (G′) and Tan Delta vs temperature are shown in Figure 2. The elastomer from Run 3 had a higher storage modulus than the elastomer from Run 6 which is consistent with the higher 100% modulus in the tensile data. The lower Tan Delta for the Run 3 elastomer indicates that it will have better hysteretic performance.

8

# EP 0 370 408 A1

## Example 6

### Prepolymer Processability Test

A dynamic viscometry test was used to fully characterize the processability of ULtBTDIs over a urethane-linked 2:1 toluenediisocyanate-diol prepolymer (ULTDIs) and over conventionally prepared tBTDI prepolymer (CVtBTDI). A liquid curative, Ethacure 300 from Ethyl Corporation was used as the chain extender. The procedure to assay prepolymer reactivity began by placing the correct weight of aromatic diamine, previously thermostatted at $50\,^\circ$C under a protective $N_2$ blanket, in a 35 mm deep, 2 mm i.d. cylindrical stainless steel cup. The correct weight of prepolymer, also thermostatted at $50\,^\circ$C was carefully layered above the diamine. The test sample was inserted into a thermostatted block, also $50\,^\circ$C for the test series described here. Total weight of the 1:1 NCO prepolymer:diamine mixture was 7.0 grams.

Above the test cup in the polyurethane rheometer was a close fitting (19.5 mm o.d.) perforated plunger mounted by a removable key on a shaft driven at constant pressure by a reciprocating air motor. The plunger base was 6 mm thick with six radially distributed 2 mm holes extending through the base. At stroke the plunger reached the cup bottom; at the upper limit a teflon seal retained the material in the cup. A series of 'O' rings was used to clean the shaft of formulation on each upstroke.

As each new plunger was mounted, its stroke rate was checked and calibrated against 'O' ring resistance. The normal set point was a 5 hertz stroke rate in an empty cup, requiring approximately 20 pounds pressure. Shaft movement was detected by magnetic sense switches at the top and bottom of a rheometer shaft and compared to a 1000 Hz frequency standard using an Analog Devices MACSYM microcomputer.

The reactivity test was started by triggering the pressure driven plunger using a contact switch which also started a floppy disc-based operating program. As the components reacted, the formulation viscosity increased and the shaft stroke rate decreased. Time and computed relative viscosity, normalized to the 200 millisecond cycle time for a specific plunger, were displayed on a CRT monitor in real time and stored in the microcomputer memory. Relative viscosity units were correlated to actual viscosities by extended calibration.

In a test run individual cycles were first timed, averaged over a minimum ($T_{min}$) and accumulated. After 80 data points had been recorded the array holding the data was compressed to 40 points and Tmin was doubled. This continued until the device was stopped or disabled by a program interrupt. BASIC software allowed X-Y plotting of time-relative viscosity on the microcomputer CRT and assignment of run information. After each rheometer run, data were transferred via the microcomputer output port to a VAX laboratory minicomputer. Final graphics were produced after numerical lineshape analyses.

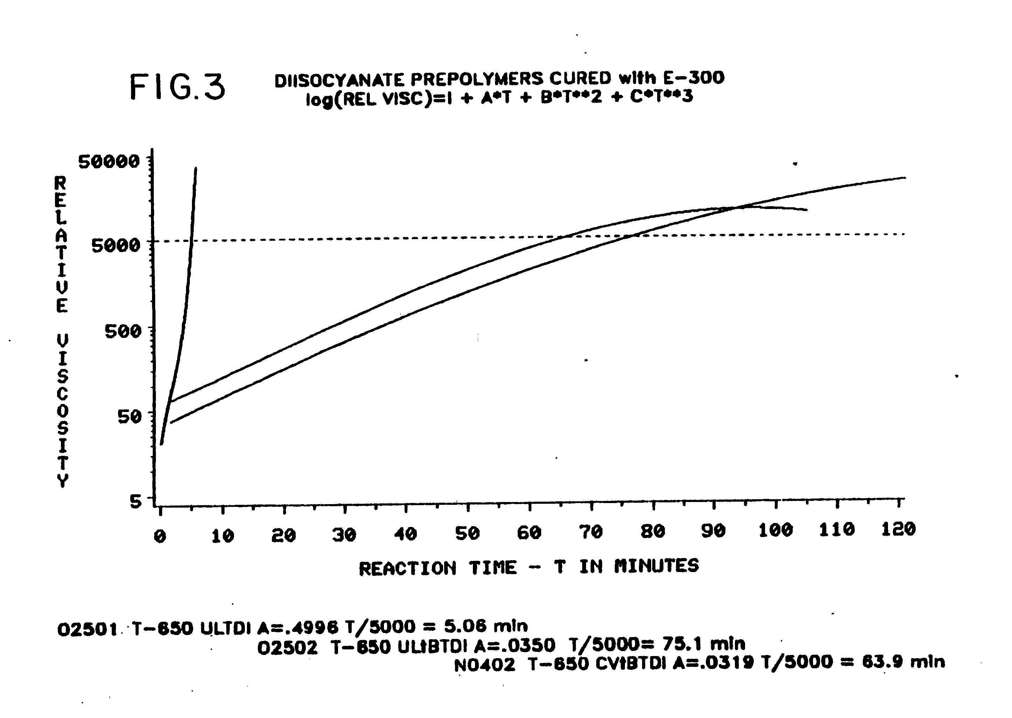

Plots of potlife times for the Example 1 and 2 diisocyanate prepolymers made from the duPont 650 mw polytetramethylene glycol (Terathane 650) and tBTDI are given in Figure 3. The ULtBTDI / Ethacure 300 mixture was less viscous initially, but cured more rapidly as shown by the crossover in relative viscosity values at approximately 90-100 minutes cure time. For comparison, the very much faster ULTDI prepolymer cured rapidly, with the arbitrary T/5000 single-valued potlife time of 5.1 minutes versus those for the CVtBTDI and ULtBTDI of 64 and 75 minutes respectively.

A polynomial exponential fit was chosen to best calculate rheometer lineshapes:

Relative Viscosity $= e^{(I + A2 + B2 + Ct3)}$

The first order term, "A" was used to measure initial reactivity, the higher order terms were used to describe more complex cohesive forces buildup in the final polymer. The relative rate reduction was quantified by the 'A' linefit terms, i.e., .500 for ULTDI and .035 and .032 for the Example 1 ULtBTDI and the Example 2 conventional CVtBTDI respectively.

## Claims

1. In a process for producing a prepolymer suited for producing polyurethane and polyurethane/urea elastomers wherein a $C_{1-6}$ alkyl-substituted toluenediisocyanate is reacted with a long chain diol to produce a prepolymer suitable for reaction with a diol or aromatic diamine to form said polyurethane and polyurethane/urea elastomer, the improvement for producing such prepolymer and for enhancing physical properties in the resulting polyurethane or polyurethane/urea elastomer which comprises:

9

(a) reacting an isomer of a 2,4- or 2,6- $C_{1-6}$ alkyl-substituted toluenediisocyanate with a long chain diol at a temperature from about 20 to 90° C and at a mole ratio of alkyl-substituted toluenediisocyanate to long chain diol from 4 to 20:1; and

(b) removing unreacted $C_{1-6}$ alkyl-substituted toluenediisocyanate from the reaction product to a level of less than about 0.15% by weight.

2. The process of Claim 1, wherein the reaction temperature is maintained from about 40 to 60° C.

3. The process of Claim 1 wherein the molecular weight of said diol is from 250 to 3000.

4. The process of Claim 3 wherein an isomer mix is used and the ratio of 2,4- to 2,6- $C_{1-6}$ alkyl-substituted toluenediisocyanate is adjusted such that the reaction product contains from about 65 to 80% by weight of reacted $C_{1-6}$ alkyl-substituted 2,4-toluenediisocyanate isomer and 20 to 35% by weight of the reacted $C_{1-6}$ alkyl-substituted-2,6-toluenediisocyanate isomer.

5. The process of Claim 4, wherein the mole ratio of $C_{1-6}$ alkyl-substituted toluenediisocyanate to long chain diol is maintained at a level from about 4 to 8:1 during the reaction of $C_{1-6}$ alkyl-substituted toluenediisocyanate with the long chain diol to form a prepolymer such that at least about 85% of such prepolymer reaction product consists of a prepolymer of two moles $C_{1-6}$ alkyl-substituted toluenediisocyanate per mole of diol.

6. The process of Claim 5 wherein said $C_{1-6}$ alkyl-substituted toluenediisocyanate is a $C_{2-4}$ alkyl-substituted toluenediisocyanate.

7. The process of Claim 6 wherein said $C_{2-4}$ alkyl-substituted toluenediisocyanate is diethyltoluenediisocyanate.

8. The process of Claim 6 wherein said $C_{2-4}$ alkyl-substituted toluenediisocyanate is 3-tertiarybutyl-2,6-toluenediisocyanate or 5-tertiarybutyl-2,4-toluenediisocyanate.

9. The process of Claim 8 wherein the long chain diol is polytetramethylene glycol.

10. The process of Claim 8 wherein the long chain diol is polypropylene glycol.

11. The process of Claim 8 wherein the long chain diol is a polyester diol.

12. The process of Claim 8 wherein a tertiarybutyltoluenediisocyanate isomer mix is used and the ratio of 2,4- to 2,6-tertiarybutyltoluenediisocyanate is adjusted such that the prepolymer contains approximately 80% of the 2,4-isomer and 20% of the 2,6-isomer.

13. A $C_{1-6}$ alkyl-substituted end-capped prepolymer reaction product formed by the reaction of a $C_{1-6}$ alkyl-substituted 2,4- or 2,6-toluenediisocyanate or mixtures thereof, and a long chain diol wherein at least 85% of its prepolymer consists of a prepolymer of 2 moles reacted $C_{1-6}$ alkyl-substituted toluenediisocyanate per mole of long chain diol; and, further, said prepolymer reaction product has an unreacted $C_{1-6}$ alkyl-substituted toluenediisocyanate content of less than about 0.15% of said prepolymer reaction product.

14. The prepolymer of Claim 13 wherein said alkyl-substituted toluenediisocyanate is a $C_{2-4}$ alkyl-substituted toluenediisocyanate.

15. The prepolymer of Claim 13 wherein said $C_{2-4}$ alkyl-substituted toluenediisocyanate is diethyltoluenediisocyanate.

16. The prepolymer of Claim 16 wherein said $C_{2-4}$ alkyl-substituted toluenediisocyanate is tertiarybutyltoluenediisocyanate.

17. The prepolymer of Claim 16 wherein the polyol is poly(tetramethylene) glycol.

18. The prepolymer of Claim 16 wherein a tertiarybutyltoluenediisocyanate isomer mixture is used and the percent reacted 2,4-tertiarybutyltoluenediisocyanate is from 65-80% and the percent reacted 2,6-tertiarybutyltoluenediisocyanate is from 20-35% by weight.

19. In a polyurethane elastomer formed by the reaction of a prepolymer of $C_{1-6}$ alkyl-substituted toluenediisocyanate and a long chain diol with a diol chain extender, the improvement which comprises said prepolymer one which has at least about 85% of a 2:1 molar adduct of 2 moles said toluenediisocyanate per mole of long chain diol.

20. The polyurethane elastomer of Claim 19 wherein said $C_{1-6}$ alkyl-substituted toluenediisocyanate is a $C_{2-4}$ alkyl-substituted toluenediisocyanate.

21. The polyurethane elastomer of Claim 19 wherein said $C_{2-4}$ alkyl-substituted toluenediisocyanate is tertiarybutyltoluenediisocyanate.

FIG.1

tBTDI Prepolymer Viscosities

Viscosity vs. Temperature (C)

—O— Example 1
—□— Example 2

EP 0 370 408 A1

FIG.2

tBTDI Prepolymers cured with E300

Temperature (deg C)

| | G' | Run 3 |
| | G" | Run 6 |
| | Tan Delta | Run 3 |
| | Tan Delta | Run 6 |

EP 0 370 408 A1

FIG.3  DIISOCYANATE PREPOLYMERS CURED with E-300
log(REL VISC)=I + A*T + B*T**2 + C*T**3

RELATIVE VISCOSITY (vertical axis): 50000, 5000, 500, 50, 5

REACTION TIME — T IN MINUTES

EP 0 370 408 A1

02501 T-650 ULTDI A=.4996 T/5000 = 5.06 min
02502 T-650 ULtBTDI A=.0350 T/5000= 75.1 min
N0402 T-650 CVtBTDI A=.0319 T/5000 = 63.9 min

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 203 931 (G.H. SWART) <br> * Claims 1-2; column 6, lines 33-67 * <br> --- | 1-21 | C 08 G 18/76 <br> C 08 G 18/10 |
| Y | EP-A-0 244 778 (AIR PRODUCTS) <br> * Claims 1-5; abstract; example 10 * <br> --- | 1-21 | |
| Y | EP-A-0 288 823 (AIR PRODUCTS) <br> * Claims 1-3,5-8; page 4, line 39 - page 5, line 15; examples 1,3 * <br> --- | 1-21 | |
| A | EP-A-0 204 141 (BAYER) <br> * Claims 1,6,7; page 10, lines 22-30; page 24, lines 15-34 * <br> ----- | 1 | |

TECHNICAL FIELDS
SEARCHED (Int. Cl.4)

C 08 G

The present search report has been drawn up for all claims

| Place of search | Date of completion of the search | Examiner |
|---|---|---|
| THE HAGUE | 22-02-1990 | VAN PUYMBROECK M.A. |